(19)

Europäisches
Patentamt
European
Patent Office
Office européen
des brevets

(11) **EP 2 523 456 A1**

(12) **EUROPEAN PATENT APPLICATION**

(43) Date of publication:
**14.11.2012 Bulletin 2012/46**

(51) Int Cl.:
*H04N 7/24* (2011.01)          *H04N 7/26* (2006.01)
*H04N 21/236* (2011.01)

(21) Application number: **11165934.8**

(22) Date of filing: **12.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Sayadi, Bessem
  Route de Villejust
  FR-91620 Nozay (FR)**
• **Changuel, Nessrine
  Route de Villejust
  FR-91620 Nozay (FR)**

(74) Representative: **Camus, Olivier Jean-Claude
  Cabinet Camus Lebkiri
  87, rue Taitbout
  75009 Paris (FR)**

(54) **Method for operating a statistical multiplexing of distributed video streams.**

(57)     The invention relates to a method for operating a statistical multiplexing of distributed video streams through a video transmission system comprising a plurality of video servers located in different places, characterized in that it comprises the different steps consisting in:

- encoding a first video stream with a first video server of the plurality of video servers to produce a first encoded video stream;
- encoding a second video stream with a second video server of the plurality of video servers to produce a second encoded video stream;
- transmitting to a central unit, through at least one network, the first encoded video stream and the second encoded video stream;

- memorizing the first encoded video stream in a first buffer of the central unit;
- memorizing the second encoded video stream in a second buffer of the central unit;
- operating, in order to produce a multiplexed video signal, a rate allocation process among at least the first encoded video stream and the second encoded video by calculating a transmission rate for each stream depending on the average quality of the memorized stream in the central unit such that a fair video quality is ensured.
- transmitting the multiplexed video signal through a broadcast channel;
- transmitting independently a status of fullness of each buffer in the central unit to each corresponding server for the next R-D control process.

Fig. 1

EP 2 523 456 A1

**Description**

**Background of the invention**

Field of the invention

The present invention deals with a method for multiplexing compressed video signals. It deals more specifically with statistical multiplexing, which consists in adapting jointly the rate and the distortion of signals; these signals correspond to encoded video signals provided by different encoders, in order to use an available bandwidth in an optimal way.

The invention relates to the field of statistical multiplexing and distribution of content, such as digital video or television programs. In a conventional digital television network, digital programming is usually collected at a central location, assembled in multiple transport streams and transported to other intermediate locations in the network for further downstream transportation to consumer premises equipment.

In the last years, more and more central locations have begun using statistical multiplexing techniques to efficiently create the centrally aggregated program multiplexes.

As is well known, statistical multiplexing is a technique used to efficiently pack multiple programs within a transport stream. This technique relies on the principle that the instantaneous bandwidth required to transmit a given program fluctuates over time, typically bused on the ease of compression of the video content.

One of the essential characteristic of statistical multiplexing systems for multiplexing distributed video streams is to respect what is called the "video quality fairness", which is an essential constraint whose aim is to offer the ability to provide programs with quality levels of the same order of magnitude. Thanks to the video quality fairness, none of the transmitted channels is advantaged comparatively to another transmitted channel in terms of quality of the transmission.

This technique makes bandwidth-efficient transmission of multiple programs possible as a multiplex by sharing the allocated bit-rate. Because the bit-rate peaks of separate program streams do not occur simultaneously, a group of programs can share an allocated bit-rate that is smaller than the sum of the bit-rate peaks of the program streams carried. Furthermore, the bit-rate contribution of each individual program stream is typically controlled to provide both a safety factor and even greater efficiencies.

Description of the prior art

A variety of approaches to statistical multiplexing are in evidence under the prior art. Statistical multiplexing systems generally comprise:

- a transmitter, for transmitting a plurality of digital signals through a plurality of channels, including a plurality of encoders each associated with one channel;
- a multiplexer for receiving the encoded digital signals and for transmitting the encoded signals as a stream of data, and operable for adjusting the distribution of the bit-rate allocation between and among the encoded signals.

When considering a statistical multiplexer of H.264/AVC-encoded video type, the rate-distortion (R-D) control may be performed by adjusting dynamically the encoding parameters of the encoders as described, for example, in the document by N. Changuel, B. Sayadi, and M. Kieffer, entitled "Joint encoder and buffer control for statistical multiplexing of multimedia contents," in IEEE Global communications Conference: Globecom, 2010.

Such a rate-distortion (R-D) control may be performed by re-encoding or transcoding the encoded video to match the R-D target fixed by the control scheme. With H.264/SVC, the encoded streams are organized into quality layers and the number of transmitted layers for each frame may be adjusted. Such an organization is called scalable, or layered, video compression. A definition of scalable video compression could be as follows: Scalable video compression is the encoding of a single video stream in different layers, each layer being encoded with its own bit rate and further increasing the video quality.

In both cases, to satisfy video quality fairness among programs, it is necessary to share quality information between encoders, trans-coders, or layer filtering units.

According to the state of art, to build a statistical multiplexing, it is necessary to communicate information according to the R-D (the information being for example the complexity of the corresponding scene and the required rate for such a complexity) to a central unit. This central unit is called the rate controller, and its task is to decide which rate should be allocated to each stream in the multiplex.

In case of stream encoded based H264 AVC, the rate controller shall modify the quantification parameter in order to satisfy the rate constraint. In many cases, this is not possible, if the operator does not have access to the encoder/server. For this reason, a trans-coding is required which induces delays and increase costs of the equipment.

This methodology is explained in many documents of the prior art, for example in the following documents:

- N. Changuel, B. Sayadi, and M. Kieffer, "Predictive control for efficient statistical multiplexing of digital video programs", in IEEE Packet Video Workshop, May 2009, pp. 1_9.
- Q. Cheng sheng, C. Guobin, and L. Jilin, "An effcient two-pass VBR encoding algorithm for H.264", in Int. Conference on Communications Circuits and Systems Proc., vol. 1, June 2006, pp. 118-122.
- M. Tagliasacchi, G. Valenzise, and S. Tubaro, "Minimum variance optimal rate allocation for multiplexed H.264/AVC bitstreams", IEEE trans on Image Processing, vol. 17, no. 7, pp. 1129_1143, July 2008.
- M. Rezaei, I. Bouazizi, and M. Gabbouj, "Implementing statistical multiplexing in DVB-H", International Journal of Digital Multimedia Broadcasting, p. 15, 2009, article ID 261231.

Today, needs for using statistical multiplexing of distributed video streams are present with servers which are located in separate places; the fact that servers are located in different places introduces communication delays and stream de-synchronization. Therefore, a decentralized rate control scheme is desirable. The situation is worst if it is considered that no information is shared between the different servers; as a consequence, it is no longer possible to directly control the rate on each server (comprising an encoder and a R-D controller) by adjusting some parameters such as the quantification step, which was commonly used until now.

An object of the invention is thus to solve the above-mentioned problems, which are due to the presence of servers in different places combined with the fact that no information can be shared between the different servers.

**Summary of the invention**

To this end, the invention proposes a system using a central unit, which can be considered as a media aware network element (MANE) or a proxy, fed by several remote digital media servers which aim is to buffer the encoded streams and to build a multiplex containing all streams (programs) to be broadcasted or multicasted over a link, typically a wireless link. One important aim of the invention is to design some statistical multiplexing technique able to satisfy some quality fairness constraint among programs and at the same time the bandwidth constraint (all programs should share a pre-defined available bandwidth).

In the proposed system, each video server is controlled independently from the others, requiring no exchange between servers. In this invention the servers/encoders are not controlled by the operator with no communication between the servers and no central rate controller is considered. Each server only observes the status of fullness of its buffer in the MANE. Using feedback information related to the fullness state, the server will adapt its rate. The feedback is constructed according to the control theory. One can have a proportional (P) or a proportional integral (PI) or a proportional integral derivative (PID) feedback corresponding each to a generic control loop feedback mechanism (controller). These controllers attempt to minimize the error (difference between a measured buffer fullness and a desired reference level) by adjusting the process control inputs such that the correction is proportional to the error (P), or proportional to the linear combination of the error and the cumulated error over the time (PI), or proportional to the linear combination of the error, the cumulated error over the time, and the derivative of the instantaneous errors (PID).

The bandwidth allocation over the air (how each buffer is emptied) among programs is done within the MANE by taking into account the quality information provided by each video coder, through the measurement of the fullness state of the associated buffer, to try to satisfy the fairness constraint.

The invention therefore relates to a method for operating a statistical multiplexing of distributed video streams through a video transmission system comprising a plurality of video servers located in different places, characterized in that it comprises the different steps consisting in:

- encoding a first video stream with a first video server of the plurality of video servers to produce a first encoded video stream;

- encoding a second video stream with a second video server of the plurality of video servers to produce a second encoded video stream;

- transmitting to a central unit, through at least one network, the first encoded video stream and the second encoded video stream;

- memorizing the first encoded video stream in a first buffer of the central unit;

- memorizing the second encoded video stream in a second buffer of the central unit;

- operating, in order to produce a multiplexed video signal, a rate allocation process among at least the first encoded video stream and the second encoded video by calculating a transmission rate for each stream depending on the average quality of the memorized stream in the central unit such that a fair video quality is ensured.

- transmitting the multiplexed video signal through a broadcast channel;

- transmitting independently a status of fullness of each buffer in the central unit to each corresponding video server. The status of fullness of each buffer is then used for the next R-D control process.

The method of the invention may have other features, which may be used separately or in combination, and in particular:

- it comprises the supplementary step consisting in adjusting the transmission rate from each buffer in the central unit according to the video quality of the stored streams such that a fair video quality is ensured after the rate allocation process.

- it comprises the supplementary step consisting in transmitting to each video server a feedback information informing on a buffer fullness state corresponding to the fullness state of the buffer associated with each video server considered after the rate allocation process.

- the feedback information is of proportional type, or of proportional integral type, or of proportional integral derivative

- each video server has a coding rate which is adjusted by using the feedback information.

- the rate allocated to each encoded video stream for operating the rate allocation process is, at a time index j, equal to $\alpha_j R_c$ where :

  - $R_c$ is an available transmission rate of the broadcast channel,

  - $\alpha_j = \dfrac{1}{N} - K_\alpha . \left( \overline{D}_j - D_j \right)$, where :

    - N is the number of video streams multiplexed to produce the multiplexed video signal;

    - $K_\alpha$ is a proportional correction factor;

    - $\overline{D}_j$ is an average distortion computed among the N video streams;

    - $D_j$ is the distortion of the j-th frame.

- the coding rate of each video server is given, at a time index j, by the following equation:

  $R_{ij} = B^0 - K_R.(B_{j-1} - B^0)$, where :

  - $K_R$ is a proportional correction factor;

  - $B^0$ is a reference level of fullness of the buffer associated with the video server.

- the video servers are operating scalable video compression.

Other features and advantages of the invention will become apparent on reading the following detailed description and examining the appended drawing. Further characteristic features and advantages of the invention are set out in the following description

**Brief description of the drawings**

- Figure 1 is a schematic illustration of a network architecture allowing the realisation of the method according to the invention.

- Figure 2-A to figure 2-D are curves representing different parameters observed during the realisation of one example of the method according to the invention.

**Detailed description of the preferred embodiment.**

The appended drawing constitutes part of the description of the invention as well as contributing to the definition of the invention, if necessary.

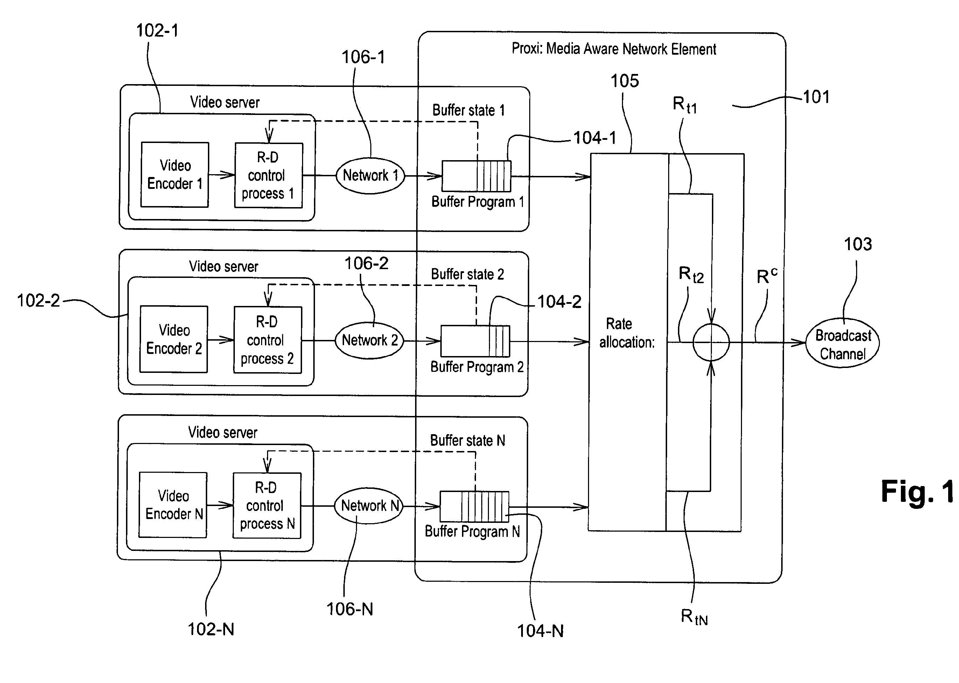

The Figure 1 depicts a solution architecture according to the invention. In figure 1, a central unit 101, which is a media aware network element (MANE) or a proxy, is fed by several remote digital media servers, or video servers, 102-i, i being a variable associated with the server considered; each video server comprises a video encoder 106-i and a Rate-Distorsion (R-D) control unit 107-i. The aim of the central unit 101 is to buffer the encoded streams and to build a multiplexed signal containing all streams (programs) to be broadcasted or multi-casted over a communication link of a broadcast channel 103, typically a wireless link.

In figure 1, a typical broadcast system is represented, in which N video programs have to be encoded and transmitted in parallel. The compressed bit-streams are buffered in buffers 104-i of the central unit 101, after having been transmitted through a network 106-i, and before being multiplexed with a multiplexer 105 of the central unit 101. The multiplexed video signal is then transmitted over the broadcast channel 103 ; the multiplexer 105 allows constant available transmission rate $R^c$ by proceeding with rate allocation for each buffer 104-i.

All video contents are provided with the same frame period $\Delta t$. At time index j, the j-th encoded frames are fed by all video servers 102-i. The i-th server provides encoded packets characterized by their rate Rij and distortion Dij . These packets are stored in the corresponding buffer 104-i of the central unit 101.

The available transmission rate $R^c$ is allocated among video programs in a centralized way within the MANE to meet the fairness constraint. For that purpose, we assume that each video server i provides to the MANE the distortion of the j-th frame $D_{ij}$. An average distortion $\overline{D}_j$ is then computed. More (less) rate is allocated to programs with a distortion larger (small) than $D_j$ .

The rate $\alpha_j R_c$ allocated to the i-th program is thus controlled as follows

$$\begin{cases} \alpha_{ij} = \dfrac{1}{N} - K_\alpha \cdot \left(\overline{D}_j - D_{ij}\right) \\ 0 \le \alpha_{ij} \le 1,\, i = 1 \ldots N \end{cases} \qquad \text{(relation 1)}$$

Where $K_\alpha$ is a proportional correction factor. With this allocation, the evolution of the level of fullness B of the buffer of the i-th program between time $j$-1 and time $j$ is,

$$B_{ij} = B_{ij-1} + \left(R_{ij} - \alpha_{ij} R^c\right)\Delta t \qquad \text{(relation 2)}$$

As a consequence, the level of the buffer of programs which produce encoded video with larger distortion than the average distortion $\overline{D}_j$ decreases faster than programs producing video with a small distortion. For those programs, the buffer level may even increase.

For each video server 102-i, an individual R-D control process is assumed to be performed at a frame level. This control may be done, for example, by adjusting the encoding parameters with H264-AVC encoders or the number of SNR layer to transmit with H264-SVC encoders.

A reference coding rate $R^0 = \dfrac{R^c}{N}$ is provided to each server. The rate $R_{ij}$ at which the i-th frame is encoded is adjusted depending on the discrepancy between the some reference level $B^0$ of the buffer associated to the j-th program as follows,

$$R_{ij} = B^{0} - K_{R}.\left(B_{i\ j-1} - B^{0}\right)$$
(relation 3)

Where $K_R$ is a proportional correction factor. One sees from relation 3)that the encoding rate increases when the buffer is below the reference level. This control technique only requires the central unit 101 to feed back the buffer level $B_{ij-1}$ to each remote video encoder, which is illustrated with the "buffer state i" information in figure 1.

Thus, the proposed solution implements a statistical multiplexing of distributed N video sources while guarantying the video quality fairness criterion. The encoder rate control is realized independently from other video sources. No central rate control is implemented or used. Only the distortion fairness is implemented in a centralized way.

A particular example is now given, where it is considered Gaussian sources with zero mean and variance,

$$\sigma_{ij}^{2}\ ,\quad i = \left\{1, \cdots, N\right\}$$ $i = \{1,\cdots,N\}$ that may vary with time.

The R-D function of each source is

$$D_{ij}\left(R_{ij}\right) = \sigma_{ij}^{2} 2^{-2R_{ij}}$$
(relation 4)

By assuming that level of the buffers $B_{ij}$ is constant with time, and by combining relation 1, relation 2 and relation 4, one gets the following system of equations,

$$R_{i\ j} = \left(\frac{1}{N} - K_{\alpha}\left(\frac{1}{N}\sum_{k}^{N}\sigma_{kj}^{2} 2^{-2R_{kj}} - \sigma_{ij}^{2} 2^{-2R_{ij}}\right)\right)R^{c}, i = 1,..., N$$

Which are satisfied by the rates at the equilibrium.

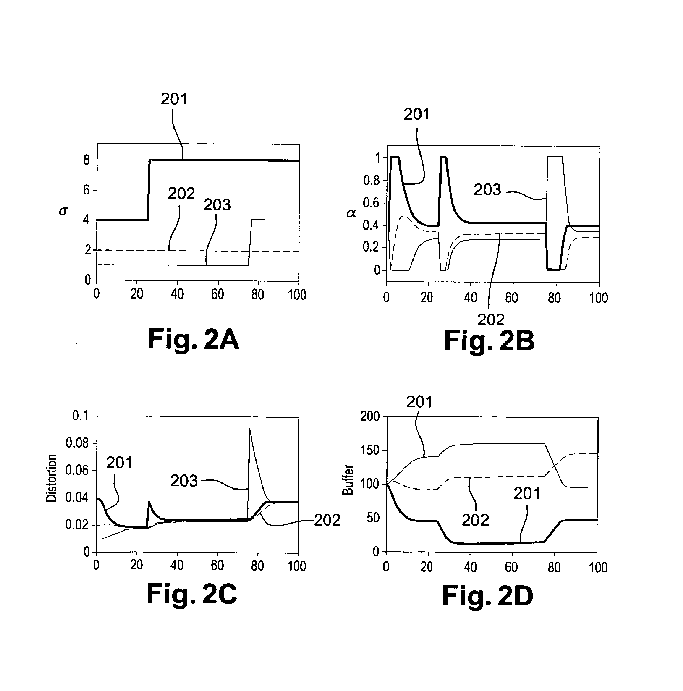

The performance of the proposed statistical multiplexing system is evaluated with three Gaussian sources, each one being characterized by a time-varying variance. The transmission rate allocation is performed according to relation 1 and the encoding rate according to relation 3. The instantaneous variance $\sigma^2$ of the source, the rate allocation $\alpha$, the distortion, and the buffer level for each program are represented respectively in figure 2-A, 2-B, 2-C and 2-D for the first source 201, the second source 202 and the third source 203.

These represented curves have been obtained with $B^0 = 100\,bits$, $R^c = 10\,bits/s$, $\Delta t = 1\,s$, $K_\alpha = 100$, and $K_R = 0,02$.

From figures 2-A to 2-D, it is shown that at each source variance change, the distortion is temporarily disturbed while satisfying the bandwidth constraint. After a certain period (5-10 iterations), the system converges to an equilibrium state where the distortion are equalized. It is also shown that when a program has high distortion, its transmission rate is lowered compared to others in order to achieve video quality fairness in the buffers.

The main advantages of the present invention consist essentially in the following points:

- increasing the spectral efficiency of the broadcast/multicast channel in the wireless network,
- increasing the number of program transmitted on a constant bandwidth channel with a good visual quality (e.g. a PSNR>30dB)
- no more need to own the video encoders
- improvement of the quality of service of the end-user: video quality fairness criterion
- increasing the income of the operator.

**Claims**

1.  Method for operating a statistical multiplexing of distributed video streams through a video transmission system comprising a plurality of video servers located in different places, **characterized in that** it comprises the different steps consisting in:

    - encoding a first video stream with a first video server of the plurality of video servers to produce a first encoded video stream;
    - encoding a second video stream with a second video server of the plurality of video servers to produce a second encoded video stream;
    - transmitting to a central unit, through at least one network, the first encoded video stream and the second encoded video stream;
    - memorizing the first encoded video stream in a first buffer of the central unit;
    - memorizing the second encoded video stream in a second buffer of the central unit;
    - operating, in order to produce a multiplexed video signal, a rate allocation process among at least the first encoded video stream and the second encoded video by calculating a transmission rate for each stream depending on the average quality of the memorized stream in the central unit such that a fair video quality is ensured.
    - transmitting the multiplexed video signal through a broadcast channel;
    - transmitting independently a status of fullness of each buffer in the central unit to each corresponding video server

2.  The method according to claim 1 **characterized in that** it comprises the supplementary step consisting in adjusting the transmission rate from each buffer in the central unit according to the video quality of the stored streams such that a fair video quality is ensured after the rate allocation process.

3.  The method according to claim 1 **characterized in that** it comprises the supplementary step consisting in transmitting to each video server a feedback information informing on a buffer fullness state corresponding to the fullness state of the buffer associated with each video server considered after rate allocation process.

4.  The method according to claim 2 or claim 3 **characterized in that** each video server has a coding rate which is adjusted by using the feedback information.

5.  The method according to one of the previous claims **characterized in that** the rate allocated to each encoded video stream for operating the rate allocation process is, at a time index j, equal to $\alpha_j R_c$ where :

    - $R_c$ is an available transmission rate of the broadcast channel,

    $$- \alpha_j = \frac{1}{N} - K_\alpha \cdot \left(\overline{D}_j - D_j\right), \text{ where :}$$

    - N is the number of video streams multiplexed to produce the multiplexed video signal;
    - $K_\alpha$ is a proportional correction factor;
    - $\overline{D}_j$ is an average distortion computed;
    - $D_j$ is the distortion of the j-th frame.

6.  The method according to claim 4 **characterized in that** the coding rate of each video server is given, at a time index j, by the following equation:

    $R_{ij} = B^0 - K_R \cdot (B_{j-1} - B^0)$, where :

    - $K_R$ is a proportional correction factor;
    - $B^0$ is a reference level of fullness of the buffer associated with the video server.
    - means for selecting said new optimized configuration only if said level of correspondence is higher than said predetermined threshold.

Fig. 1

**Fig. 2A**

**Fig. 2B**

**Fig. 2C**

**Fig. 2D**

**EUROPEAN SEARCH REPORT**

Application Number

EP 11 16 5934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2010/138913 A1 (HARMONIC INC [US]; MILNE MIKE [US]; HAMIDI-RAD SHAHAB [US]; LEVIN DROR) 2 December 2010 (2010-12-02) * paragraph [0037] - paragraph [0040] * * paragraph [0061] * * figures 1-8 * | 1-4 | INV. H04N7/24 H04N7/26 H04N21/236 |
| Y | MISHRA P P: "Fair bandwidth sharing for feedback controlled VBR video traffic", GLOBAL TELECOMMUNICATIONS CONFERENCE, 1995. CONFERENCE RECORD. COMMUNI CATION THEORY MINI-CONFERENCE, GLOBECOM '95., IEEE SINGAPORE 13-17 NOV. 1995, NEW YORK, NY, USA,IEEE, US, vol. 2, 13 November 1995 (1995-11-13), pages 1102-1108, XP010164396, DOI: 10.1109/GLOCOM.1995.502574 ISBN: 978-0-7803-2509-8 * section 2.2 section 2.3 * | 1-4 | |
| A | YINGSONG HUANG ET AL: "Analysis and Design of a Proportional-Integral Rate Controller for Streaming Videos", GLOBAL TELECOMMUNICATIONS CONFERENCE, 2009. GLOBECOM 2009. IEEE, IEEE, PISCATAWAY, NJ, USA, 30 November 2009 (2009-11-30), pages 1-6, XP031645764, ISBN: 978-1-4244-4148-8 * abstract * | 5,6 | TECHNICAL FIELDS SEARCHED (IPC) H04N |

-/--

The present search report has been drawn up for all claims

| Place of search | Date of completion of the search | Examiner |
|---|---|---|
| The Hague | 20 September 2011 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 11 16 5934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TROW I: "Video Distribution Networks Using Remote Statistical Multiplexing", SMPTE - MOTION IMAGING JOURNAL, SOCIETY OF MOTION PICTURE AND TELEVISION ENGINEERS, WHITE PLAINS, NY, US, vol. 117, no. 1, 1 January 2008 (2008-01-01), pages 37-41, XP001563304, ISSN: 0036-1682 * the whole document * | 1-4 | |
| A | DAGIUKLAS A ET AL: "Rate-based flow control of video services in ATM networks", GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, vol. 1, 18 November 1996 (1996-11-18), pages 284-288, XP010220366, DOI: 10.1109/GLOCOM.1996.594375 ISBN: 978-0-7803-3336-9 * abstract * | 1-4 | TECHNICAL FIELDS SEARCHED (IPC) |
| A | WO 02/25951 A2 (GEN INSTRUMENT CORP [US]; LIU VINCENT [US]; WU SIU WAI [US]; CASTELOES) 28 March 2002 (2002-03-28) * abstract * | 1-4 | |
| A | US 7 016 337 B1 (WU FANG [US] ET AL) 21 March 2006 (2006-03-21) * abstract * * figure 10 * | 1-4 | |
| A | US 2002/085584 A1 (ITAWAKI MOTOFUMI [JP] ET AL) 4 July 2002 (2002-07-04) * abstract * * figure 4 * | 1-4 | |

-/--

The present search report has been drawn up for all claims

| Place of search | Date of completion of the search | Examiner |
|---|---|---|
| The Hague | 20 September 2011 | Arpaci, Mutlu |

EPO FORM 1503 03.82 (P04C01)

Europäisches
Patentamt

European
Patent Office

Office européen
des brevets

# EUROPEAN SEARCH REPORT

Application Number

EP 11 16 5934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/094031 A1 (NGAI AGNES Y [US] ET AL) 18 July 2002 (2002-07-18)<br>* abstract *<br>* figure 3 *<br>----- | 1-4 | |

TECHNICAL FIELDS
SEARCHED      (IPC)

The present search report has been drawn up for all claims

| Place of search | Date of completion of the search | Examiner |
|---|---|---|
| The Hague | 20 September 2011 | Arpaci, Mutlu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 16 5934

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2011

| Patent document cited in search report | | Publication date | Patent family member(s) | | Publication date |
|---|---|---|---|---|---|
| WO 2010138913 | A1 | 02-12-2010 | NONE | | |
| WO 0225951 | A2 | 28-03-2002 | AT | 381855 T | 15-01-2008 |
| | | | AU | 8859601 A | 02-04-2002 |
| | | | CA | 2422131 A1 | 28-03-2002 |
| | | | CN | 1461568 A | 10-12-2003 |
| | | | DE | 60131993 T2 | 11-12-2008 |
| | | | EP | 1320996 A2 | 25-06-2003 |
| | | | TW | 519834 B | 01-02-2003 |
| | | | US | 7418007 B1 | 26-08-2008 |
| US 7016337 | B1 | 21-03-2006 | NONE | | |
| US 2002085584 | A1 | 04-07-2002 | CA | 2355389 A1 | 17-02-2002 |
| | | | JP | 4441839 B2 | 31-03-2010 |
| | | | JP | 2002064827 A | 28-02-2002 |
| US 2002094031 | A1 | 18-07-2002 | JP | 3756346 B2 | 15-03-2006 |
| | | | JP | 2000078577 A | 14-03-2000 |
| | | | US | 6859496 B1 | 22-02-2005 |
| | | | US | 2004202248 A1 | 14-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. CHANGUEL ; B. SAYADI ; M. KIEFFER.** Joint encoder and buffer control for statistical multiplexing of multimedia contents. *IEEE Global communications Conference: Globecom,* 2010
- **N. CHANGUEL ; B. SAYADI ; M. KIEFFER.** redictive control for efficient statistical multiplexing of digital video programs. *IEEE Packet Video Workshop,* May 2009, 1-9
- **Q. CHENG SHENG ; C. GUOBIN ; L. JILIN.** An effcient two-pass VBR encoding algorithm for H.264. *Int. Conference on Communications Circuits and Systems Proc.,* June 2006, vol. 1, 118-122
- **M. TAGLIASACCHI ; G. VALENZISE ; S. TUBARO.** Minimum variance optimal rate allocation for multiplexed H.264/AVC bitstreams. *IEEE trans on Image Processing,* July 2008, vol. 17 (7), 1129-1143
- **M. REZAEI ; I. BOUAZIZI ; M. GABBOUJ.** Implementing statistical multiplexing in DVB-H. *International Journal of Digital Multimedia Broadcasting,* 2009, 15